# EUROPEAN PATENT APPLICATION

(11) **EP 3 663 210 A2**
(43) Date of publication of application: **10.06.2020**
(21) Application number: 18792413.9
(22) Date of filing: 23.07.2018
(51) Int. Cl.: B64F 1/36, B64D 13/06, B60H 1/00, F25B 30/00

(54) **TEMPERATURE CONTROL EQUIPMENT FOR INSIDE AIRCRAFT OR SIMILAR**

(30) Priority: 04.08.2017 ES 201731009
(71) Applicant: Adelte Airport Technologies, S.L., 08029 Barcelona (ES)
(72) Inventor: PUIG OLIVERAS, Oriol, 08029 Barcelona (ES)
(74) Representative: Isern Patentes y Marcas S.L.
(86) International application number: PCT/ES2018/070523
(87) International publication number: WO 2019/025653

(57) **Abstract**

The invention relates to temperature control equipment for inside aircraft or similar, comprising a closed-cycle cooling circuit, the circuit comprising compression means, a condensation/evaporation exchanger, an expansion valve and an evaporation/condensation exchanger, and further comprising an open-cycle air circuit arranged such that the air from said air circuit crosses through the condensation/evaporation exchanger, wherein the air circuit incorporates an additional heat exchanger that, in the heat pump-type operations, is interposed in the path of the air prior to the passage of the air through the condensation/evaporation exchanger, and said additional heat exchanger in turn has coolant fluid flowing through it which is pressurised and heated from the closed-cycle cooling circuit.

## Description

### OBJECT OF THE INVENTION

The object of the present patent application is to register temperature control equipment for the inside of aircraft or similar which incorporates notable innovations and advantages over the techniques used hitherto.

More specifically, the invention proposes the development of temperature control equipment for the inside of aircraft or similar, which due to the particular arrangement thereof, enables suitable and effective preheating of the air prior to the passage thereof through the condensation of the coolant fluid, in the operations thereof as a heat pump.

### BACKGROUND OF THE INVENTION

It is known in the current state of the art, and in the airport sector, that when aircraft are on the ground, once they are in the stopped position thereof, they must turn the engines off, for which reason they need external equipment and systems to be able to provide any type of service inside the aircraft, and specifically, that referring to air conditioning inside of it.

These preconditioned air units can be fixed, in other words, mounted in the boarding bridges or near them (islands), or mobile and mounted in trucks or trailers.

Currently, one of the main problems of air preconditioning equipment is that in the heat pump-type operations, and when the temperatures are lower than the condensation limit, batteries with electrical resistors are used to preheat the air and reach the minimum condensation temperature.

The use of batteries with electrical resistors to preheat the air has the main disadvantage of causing high energy consumption and being an expensive solution.

The present invention contributes to solving the present problem since it enables suitable and effective preheating of the air prior to the passage thereof through the condensation of the coolant fluid in the case that the initial temperature thereof is lower than the condensation limit temperature.

### DESCRIPTION OF THE INVENTION

The present invention has been developed with the aim of providing temperature control equipment for inside aircraft or similar, which comprises and is based on a closed-cycle cooling circuit through which a coolant fluid circulates, the circuit comprising compression means, a condensation/evaporation exchanger, an expansion valve and an evaporation/condensation exchanger, and which also comprises an open-cycle air circuit equipped with supply means and arranged such that the air from said air circuit crosses through the condensation/evaporation exchanger, which is essentially characterised in that the air circuit incorporates an additional heat exchanger that, in the heat pump-type operations, is interposed in the path of the air and positioned prior to the passage of the air through the condensation/evaporation exchanger, and said additional heat exchanger in turn has coolant fluid flowing through it which exits pressurised and heated from the compression means.

Alternatively, in the temperature control equipment for the inside of aircraft or similar, the compression means comprise at least one inverter compressor.

In another alternative embodiment, in the temperature control equipment for the inside of aircraft or similar, the compression means comprise at least one on-off compressor.

In another alternative embodiment, in the temperature control equipment for the inside of aircraft or similar, the compression means comprise a plurality of inverter and/or on-off compressors arranged in series.

Additionally, in the temperature control equipment for the inside of aircraft or similar, the air supply means comprise at least one centrifugal fan.

Preferably, the temperature control equipment for the inside of aircraft or similar is installed in an air conditioning system for airport use.

Thanks to the present invention, adequate and effective preheating of the air is obtained prior to the passage thereof through the condensation of the coolant fluid, in the case that the initial temperature thereof is lower than the limit condensation temperature, by means of the use of thermodynamic solutions and without needing to use batteries with electrical resistors.

Other characteristics and advantages of the temperature control equipment for the inside of aircraft or similar will be evident from the description of a preferred, but not exclusive embodiment which is illustrated by way of non-limiting example in the drawings which are included, in which:

### BRIEF DESCRIPTION OF THE DRAWINGS

Figure 1 is a schematic view of a preferred embodiment of the temperature control equipment for the inside of aircraft or similar of the present invention.
Figure 2 is a schematic plan view of a specific arrangement for the use thereof of a preferred embodiment of the temperature control equipment for the inside of aircraft or similar of the invention.
Figure 3 is a schematic perspective view of a specific arrangement for the use thereof of a preferred embodiment of the temperature control equipment for the inside of aircraft or similar of the invention shown in Figure 2.

### DESCRIPTION OF A PREFERRED EMBODIMENT

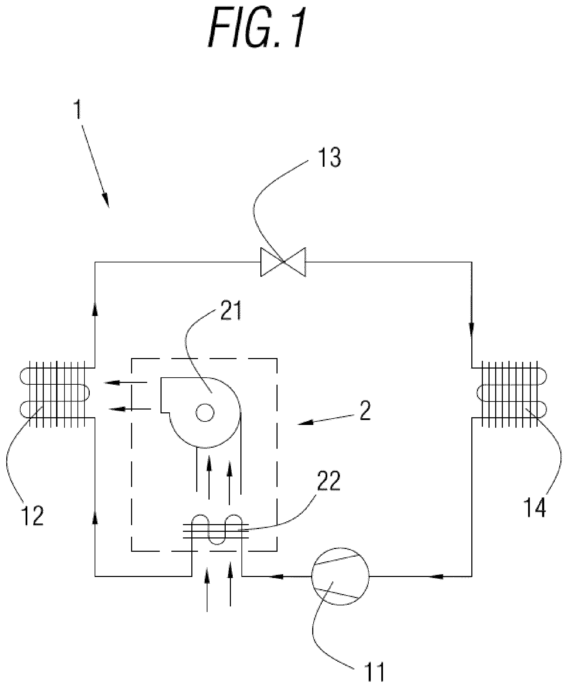

As shown schematically in Figure 1, the temperature control equipment for the inside of aircraft or similar of the invention comprises and is based on a closed-cycle cooling circuit 1 through which a coolant fluid known in the state of the art circulates.

Said circuit 1 comprises compression means 11, a condensation/evaporation exchanger 12, an expansion valve 13 and an evaporation/condensation exchanger 14.

The coolant fluid of the closed-cycle cooling circuit 1 follows the path indicated by the arrows in said circuit 1.

The temperature control equipment for the inside of aircraft or similar of the invention further comprises an open-cycle air circuit 2, as indicated by the dotted rectangle in Figure 1. Said air circuit 2 is equipped with supply means 21 to move the air and arranged such that the air from said air circuit 2 crosses through the condensation/evaporation exchanger 12 of the closed-cycle cooling circuit 1, as indicated by the arrows.

The air circuit 2 further incorporates an additional heat exchanger 22, which is interposed in the path of the air, and positioned prior to the passage of the air through the condensation/evaporation exchanger 12 of the closed-cycle cooling circuit 1, in the case of heat pump-type operations of said closed-cycle cooling circuit 1 and therefore, of the temperature control equipment for the inside of aircraft or similar of the invention.

Said additional heat exchanger 22 in turn has pressurised and heated coolant fluid flowing through it which works in the closed-cycle cooling circuit 1 and comes from the compression means 11.

The described arrangement of the temperature control equipment for the inside of aircraft or similar of the invention implies that the air that circulates through the air circuit 2 and is supplied by the supply means 21, passes through the heat exchanger 22 before passing through the condensation/evaporation exchanger 12 of the closed-cycle cooling circuit 1.

According to the thermodynamic operation of the circuit 1, the coolant fluid leaves the compression means 11 in a pressurised and heated gas phase. The heat exchanger 22, according to the arrangement described and indicated in Figure 1, upon receiving the passage of said coolant fluid, thus transfers heat to the air that passes through it, as indicated by Figure 1, which implies that said air is heated and that upon arriving at the condensation/evaporation exchanger 12 of the circuit 1 it raises the temperature thereof to thus adequately perform the condensation thereof.

In different preferred embodiments of the temperature control equipment for the inside of aircraft or similar of the invention, the compression means 11 can comprise one or more inverter and/or on-off compressors, also arranged in series according to the operational needs.

Also in different preferred embodiments, the air supply means 21 can comprise a centrifugal fan.

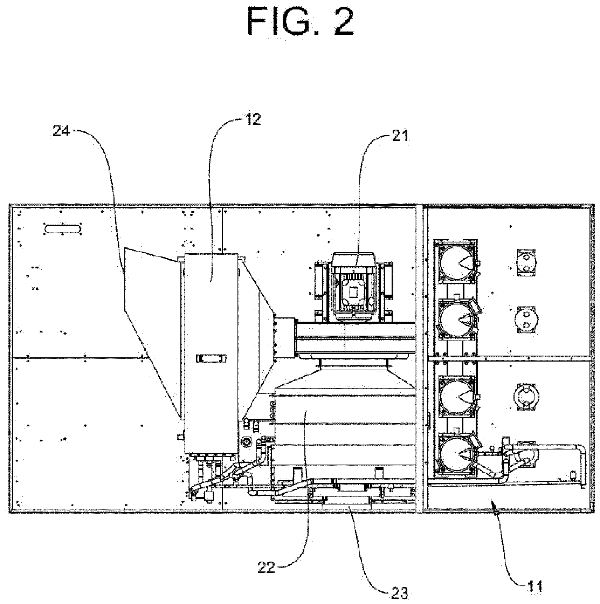

Figure 2 show a schematic plan representation of the temperature control equipment for the inside of aircraft or similar of the invention, in a specific arrangement for the use thereof, wherein the compression means 11, the condensation/evaporation exchanger 12, the air supply means 21 and the additional heat exchanger 22 can be seen, as well as the position of the air inlet 23 and the air outlet 24 and open-cycle air circuit 2 can be seen.

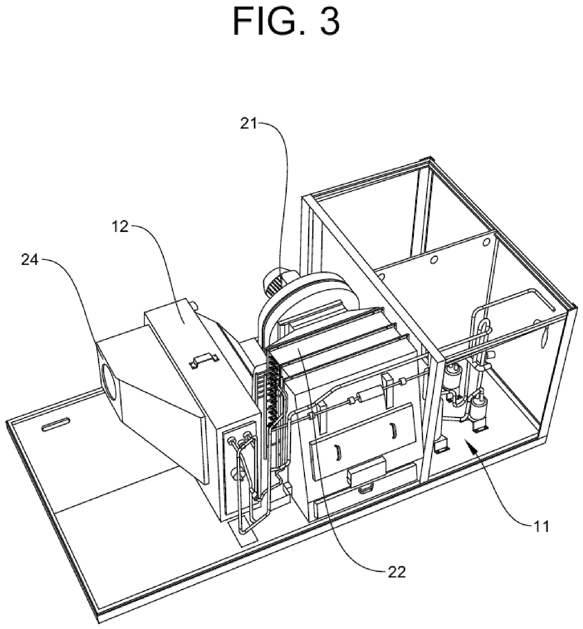

Figure 3 shows a schematic perspective view of a specific arrangement for the use thereof of the temperature control equipment for the inside of aircraft or similar of the invention shown in Figure 2.

The temperature control equipment for the inside of aircraft or similar of the present invention provides great advantages which are very useful when the condensation/evaporation exchanger 12 is at an initial temperature lower than the temperature necessary for starting the condensation of the coolant fluid in gas phase.

In the current state of the art, when the initial temperature for the condensation is lower than the temperature necessary for the condensation, electrical batteries are used, thus preheating the air until the minimum condensation temperature is reached. Such a technical solution implies elevated energy consumption, in addition to being expensive.

The technical solution described in the temperature control equipment for the inside of aircraft or similar of the present invention is an eminently thermodynamic solution, and is therefore more advantageous than the use of electrical batteries in the current state of the art, further extending the temperature range of the use thereof.

A very useful application and use of temperature control equipment for the inside of aircraft or similar of the present invention is, for example, in airport installations, and specifically in equipment external to an aircraft in order to be able to supply air conditioning inside of it when said aircraft is already in the stopped position. Said equipment can be mounted in the boarding bridges or near them (islands), or also be mobile and mounted in trucks or trailers.

In such circumstances, it can be common that said external equipment is at a temperature lower than the limit for starting condensation. As mentioned above, in the current state of the art, in the heat pump-type operations, when the temperatures are lower than the condensation limit, batteries with electrical resistors are used to preheat the air and reach the minimum condensation temperature.

The temperature control equipment for the inside of aircraft or similar of the present invention thus implies a considerable advantage in the preheating of the exterior air that is necessary for supplying the air conditioning of an aircraft when stopped, since it substitutes the batteries with electrical resistors with a thermodynamic solution.

The details, shapes, dimensions and other accessory elements, as well as the materials used to manufacture the temperature control equipment for the inside of aircraft or similar of the invention, may be suitably substituted for others which are technically equivalent, and do not diverge from the essential nature of the invention, nor the scope defined by the claims included below.

## Claims

1. Temperature control equipment for inside aircraft or similar, which comprises and is based on a closed-cycle cooling circuit (1) through which a coolant fluid circulates, the circuit (1) comprising compression means (11), a condensation/evaporation exchanger (12), an expansion valve (13) and an evaporation/condensation exchanger (14), and which also comprises an open-cycle air circuit (2) equipped with supply means (21) and arranged such that the air from said air circuit (2) crosses through the condensation/evaporation exchanger (12), **characterised in that** the air circuit (2) incorporates an additional heat exchanger (22) that, in the heat pump-type operations, is interposed in the path of the air and positioned prior to the passage of the air through the condensation/evaporation exchanger (12), and said additional heat exchanger (22) in turn has coolant fluid flowing through it which exits pressurised and heated from the compression means (11).

2. The temperature control equipment for the inside of aircraft or similar according to claim 1, **characterised in that** the compression means (11) comprise at least one inverter compressor.

3. The temperature control equipment for the inside of aircraft or similar according to claim 1, **characterised in that** the compression means (11) comprise at least one on-off compressor.

4. The temperature control equipment for the inside of aircraft or similar according to claim 1, **characterised in that** the compression means (11) comprise a plurality of inverter and/or on/off compressors arranged in series.

5. The temperature control equipment for the inside of aircraft or similar according to claim 1, **characterised in that** the air supply means (21) comprise at least one centrifugal fan.

6. The temperature control equipment for the inside of aircraft or similar according to any of the preceding claims, **characterised in that** it is installed in an air conditioning system for airport use.
